# EUROPÄISCHE PATENTSCHRIFT

(11) **EP 4 062 608 B1**
(45) Veröffentlichungstag und Bekanntmachung des Hinweises auf die Patenterteilung: **01.01.2025**
(21) Anmeldenummer: 20803818.2
(22) Anmeldetag: 09.11.2020
(51) Int. Cl.: H04L 25/03, H04L 25/49

(54) **PULS-AMPLITUDEN-MODULATIONS-TRANSCEIVER, FELDGERÄT UND VERFAHREN ZUM BETREIBEN DES PULS-AMPLITUDEN-MODULATIONS-TRANSCEIVERS**
PULSE AMPLITUDE MODULATION TRANSCEIVER, FIELD DEVICE AND METHOD FOR OPERATING THE PULSE AMPLITUDE MODULATION TRANSCEIVER
ÉMETTEUR-RÉCEPTEUR À MODULATION D'IMPLUSIONS EN AMPLITUDE, APPAREIL DE TERRAIN ET PROCÉDÉ POUR FAIRE FONCTIONNER L'ÉMETTEUR-RÉCEPTEUR À MODULATION D'IMPULSIONS EN AMPLITUDE

(30) Priorität: 19.11.2019 DE 102019131216
(43) Veröffentlichungstag der Anmeldung: 28.09.2022
(73) Patentinhaber: Endress+Hauser Flowtec AG, 4153 Reinach (CH)
(72) Erfinder: KAPPERTZ, Jannis, 4147 Aesch (CH); STUTZ, Alexander, 4468 Kienberg SO (CH); WUCHER, Markus, 79541 Lörrach (DE)
(74) Vertreter: Penner, Paul
(86) Internationale Anmeldenummer: PCT/EP2020/081423
(87) Internationale Veröffentlichungsnummer: WO 2021/099150

(56) Entgegenhaltungen:
- EP-A1- 3 406 060
- US-A1- 2008 240 318
- US-A1- 2015 215 138
- WANG WEIYU ET AL: "Advanced Digital Signal Processing for Reach Extension and Performance Enhancement of 112 Gbps and Beyond Direct Detected DML-Based Transmission", JOURNAL OF LIGHTWAVE TECHNOLOGY, IEEE, USA, vol. 37, no. 1, 1 January 2019 (2019-01-01), pages 163 - 169, XP011707551, ISSN: 0733-8724, [retrieved on 20190131], DOI: 10.1109/JLT.2018.2885707

## Beschreibung

Die Erfindung betrifft einen Puls-Amplituden-Modulations-Transceiver, ein Feldgerät mit einem solchen Puls-Amplituden-Modulations-Transceiver sowie ein Verfahren zum Betreiben eines solchen Puls-Amplituden-Modulations-Transceivers.

Puls-Amplituden-Modulation, oder auch kurz PAM ist ein bekanntes Verfahren zur Übertragung von Informationen, wobei ein Sender Informationen beispielsweise auf einem elektrischen Signal mittels PAM codiert, wobei dieses durch einen Empfänger empfangen und decodiert wird.

PAM-Signale weisen dabei mehrere Zustände in Form von verschiedenen Signalpegeln auf und können auch mehr als zwei Zustände aufweisen. So zeigen beispielsweise D.Walter und Y. Chen in "DSL Simulation Techniques and Standard Development for Digital Subscriber Line", veröffentlicht in "Macmillan Technical Publishing" 1998 einen PAM-Transceiver zur Erzeugung und Verarbeitung von PAM-Signalen. Solche PAM-Verfahren bieten den Vorteil einer höheren Informationsdichte sowie die Möglichkeit Zustände mit positiven und negativen Spannungen einzurichten, so dass eine Energieübertragung zwischen verschiedenen PAM-Transceivern minimiert werden kann. Die höhere Informationsdichte jedoch wird durch einen geringeren Spannungsabstand zwischen zwei benachbarten Zuständen erkauft.

Dies hat zur Folge, dass PAM-Signale anfällig sind gegenüber durch den Kommunikationskanal verursachte Signalverzerrungen. Dies kann bei Kenntnis einer Impulsantwort des Kommunikationskanals kompensiert werden, jedoch ist diese Impulsantwort nicht konstant, und hängt beispielsweise von einer Umgebungstemperatur, und der Art und Weise der Auslegung des Kommunikationskanals ab. Insbesondere bei Wechsel des Kommunikationskanals muss mit einer anderen Impulsantwort des neuen Kommunikationskanals gerechnet werden.

Die US2008/0240318A1 beschreibt eine Vorrichtung um codierte Daten mittels eines MMA-Mechanismus zurückzugewinnen.

Wang Weiyu et al. in "Journal of lightwave technology, IEEE, USA, Bd. 37, Nr. 1, 1. Januar 2019, Seiten 163-169 beschreibt erweiterte Signalverarbeitung bei einer 4-Level PAM-Signalübertragung mit fortschrittlichen digitalen Signalverarbeitungsalgorithmen.

Aufgabe der Erfindung ist es daher, einen PAM-Transceiver, ein Feldgerät mit einem PAM-Transceiver und ein Verfahren zum Betreiben des PAM-Transceivers vorzuschlagen, welche unempfindlich und robust gegenüber einer veränderlichen Impulsantwort eines Kommunikationskanals bzw. gegenüber einem Wechsel des Kommunikationskanals sind.

Die Aufgabe wird gelöst durch einen PAM-Transceiver gemäß dem unabhängigen Anspruch 1, durch ein Feldgerät gemäß dem unabhängigen Anspruch 10 sowie durch ein Verfahren gemäß dem unabhängigen Anspruch 11.

Ein erfindungsgemäßer PAM-Transceiver eingerichtet zur Verarbeitung eines elektrischen Datensignals mit mindestens zwei Zuständen, und insbesondere mindestens drei Zuständen mit einer elektronischen Schaltung umfasst:
Eine Datenschnittstelle eingerichtet zur Verbindung mit einem Kommunikationskanal, insbesondere einem Duplex-Kommunikationskanal und eingerichtet zur Digitalisierung von empfangenen Datensignalen;

Einen ersten Schaltungsabschnitt verbunden mit der Datenschnittstelle umfassend:
- Einen Entzerrer zur Kompensation von Verzerrungen des Datensignals, welche durch den Kommunikationskanal verursacht werden;
- Einen hinter dem Entzerrer angeordneten Interpretierer zur Erkennung von Symbolen, welche durch das Datensignal übertragen werden;

Einen zweiten Schaltungsabschnitt verbunden mit der Datenschnittstelle umfassend:
- Eine Verzögerungseinheit zur zeitlichen Verschiebung des Datensignals;

Einen MMA-Prozessor zur Erkennung einer Signalphase des Datensignals mit einem ersten Eingang und einem zweiten Eingang, wobei der erste Schaltungsabschnitt dem ersten Eingang zugeführt wird, und wobei der zweite Schaltungsabschnitt dem zweiten Eingang zugeführt wird,
wobei das Datensignal eine Abfolge von Zuständen umfasst, welche Zustände jeweils ein Informationssymbol repräsentieren, wobei jedem Symbol ein Takt des Datensignals zugeordnet ist,
wobei
der zweite Schaltungsabschnitt ein anpassbares Filter mit endlicher Impulsantwort aufweist,
wobei das anpassbare Filter dazu eingerichtet ist, die Impulsantwort des Kommunikationskanals zu symmetrisieren.

Der MMA-Prozessor ist dazu eingerichtet, einen MuellerMüller-Algorithmus gemäß IEEE Transactions on Communications, Vol. COM-24, No.5, May 1976 auszuführen.

Hierbei werden dem MMA-Prozessor durch den Interpretierer erkannte Symbole S und dem Datensignal zugehörige Zustände Z zugeführt, wobei der MMA-Prozessor Werte gemäß folgender Berechnungsvorschrift ausgibt:
MM = (Zₙ - Sₙ₋₁)-(Sₙ - Zₙ₋₁), wobei n bzw. n-1 einen n-ten bzw. n-1-ten Takt des Datensignals auszeichnet. Bei gut eingestelltem PAM-Transceiver ist MM gleich 0, Werte ungleich 0 können zu einer Anpassung der Signalphase und/oder Taktung des PAM-Transceivers herangezogen werden. Der MMA-Prozessor ist jedoch darauf angewiesen, dass ein an einen Zustandseingang des MMA-Prozessor übermittelter Zustand durch den MMA-Prozessor verarbeitbar ist, was durch das Filter gemäß der Erfindung sichergestellt ist.

Die Werte MM geben dabei eine Phase zwischen Abtastpunkten des MMA-Prozessors und dem Datensignal an.

Erfindungsgemäß ist daher im zweiten Schaltungsabschnitt ein Filter mit endlicher Impulsantwort vorgeschaltet, welches Filter eine Eigenschaft aufweist, eine Impulsantwort des Kommunikationskanals zu symmetrisieren, damit der MMA-Prozessor in der Lage ist, korrekt zu arbeiten.

Eine symmetrische Impulsantwort des Kommunikationskanals ist eine Voraussetzung, dass der MMA-Prozessor in der Lage ist, den MuellerMüller-Algorithmus korrekt auszuführen.

Eine weitere Voraussetzung ist, dass die Impulsantwort in einem Zeitbereich um einen Maximalwert monoton verläuft, wobei die Impulsantwort in einem Zeitbereich entsprechend zwei Takten (T) vor dem Maximalwert monoton steigend ist, wobei die Impulsantwort in einem Zeitbereich entsprechend zwei Takten (T) nach dem Maximalwert monoton fallend ist. Dies ist jedoch in den meisten Fällen bereits gegeben oder kann durch Einrichtung eines Tiefpassfilters bewerkstelligt werden. Ein Fachmann kann die Überprüfung der Monotonie und gegebenenfalls die Einrichtung eines Tiefpassfilters im Rahmen seines fachmännischen Könnens durchführen.

In einer Ausgestaltung ist das Filter mittels dreier Koeffizienten einstellbar,
wobei die Koeffizienten beispielsweise basierend auf einem zu einem Takt gehörenden Symbol, auf einem zu einem direkt vorhergehenden Takt gehörenden früheren Zustand und einem zu einem anschließenden Takt gehörenden späteren Zustand einstellbar sind,
wobei das Filter insbesondere die Eigenschaft aufweist, eine Abfolge "früherer Zustand - Symbol - späterer Zustand" in einem Zustand von passender, bzw. idealer Phase zu symmetrisieren.

Eine passende bzw. ideale Phase liegt dann vor, wenn eine Ausgabe des MMA-Prozessors 0 oder ein einem Phasenwinkel entsprechender Wert kleiner als 5 Grad, und insbesondere kleiner als 2 Grad und bevorzugt kleiner als 1 Grad ist.

Das Filter kann beispielsweise ein Filter mit endlicher Impulsantwort sein, wobei das dem MMA-Prozessor zugeführte Datensignal mit sich selbst gemischt wird. Die drei Filterkoeffizienten betreffen beispielsweise eine Anzahl von Mischungen, Mischungsstärke, und zeitliche Verschiebung der Mischungen.

Die Koeffizienten können beispielsweise bei Einschalten des PAM-Transceivers durch den Entzerrer bestimmt und an das Filter übermittelt werden.

In einer Ausgestaltung ist der Entzerrer dazu eingerichtet, durch den Interpretierer interpretierte, zu jeweiligen Takten gehörende Zustände mit nichtinterpretierten, zu entsprechenden Takten gehörenden Zuständen zu vergleichen und bei mangelnder Passung Entzerrparameter adaptiv zu variieren und dadurch eine Passung herzustellen.

Auf diese Weise kann der PAM-Transceiver auf eine variierende Impulsantwort des Kommunikationskanals reagieren und sich entsprechend einstellen.

In einer Ausgestaltung weist der erste Schaltungsabschnitt eine Rückkopplungsschleife von einem Ausgang des Interpretierers zum Entzerrer auf.

Falls der Standard IEEE 802.3-2018 eingehalten werden muss, ist eine "Zustand - Symbol"-Zuordnung erforderlich, welche in weniger als 10^-9 Fällen unkorrekt ist. Vor einer Adaption bzw. Einstellung der Filterkoeffizienten ist dies normalerweise nicht gegeben, da die Impulsantwort des Kommunikationskanals nicht bekannt ist. Falls jedoch deutlich mehr als eine Hälfte aller empfangenen Zustände korrekt in Symbole übersetzt wird, kann ein Unterschied zwischen einer erwarteten, einem jeweiligen Symbol entsprechenden Spannung und einer tatsächlich anliegenden Spannung dazu genutzt werden, Filterkoeffizienten anzupassen um den Unterschied zu minimieren und dadurch die Zuordnung "Zustand - Symbol" zu verbessern. Dies ist auch bekannt unter dem Fachbegriff "Blind Training".

In einer Ausgestaltung sind die drei Koeffizienten des Filters durch Messen oder Kenntnis der Impulsantwort des Kommunikationskanals festlegbar,
oder
wobei die drei Koeffizienten des Filters mittels angepasster Entzerrparameter des Entzerrers festlegbar sind.

In einer Ausgestaltung ist der PAM-Transceiver dazu eingerichtet, mittels des MMA-Prozessors eine Taktfrequenz oder eine Phase des Datensignals zu bestimmen und eine Kommunikation über den Kommunikationskanal zu synchronisieren.

In einer Ausgestaltung weist die Datenschnittstelle einen Analog-/Digitalwandler auf, welcher dazu eingerichtet ist, das von der Datenschnittstelle empfangene Datensignal zu digitalisieren und dem ersten Schaltungsabschnitt sowie dem zweiten Schaltungsabschnitt zuzuführen,
wobei der MMA-Prozessor dazu eingerichtet ist, der Datenschnittstelle und insbesondere dem Analog-/Digitalwandler eine Information zu einer Phase zwischen einem Abtastpunkt des MMA-Prozessors und dem Datensignal bereitzustellen,
wobei eine zweite Rückkopplungsschleife eingerichtet ist, um die Information an die Datenschnittstelle bzw. an den Analog-/Digitalwandler zu übermitteln.

Die Information zur Phase kann dann dazu verwendet werden, das Datensignal gegenüber den Abtastpunkten zeitlich zu verschieben und einen Phasenfehler zu minimieren.

In einer Ausgestaltung weist der PAM-Transceiver einen Echo-Unterdrücker zur Unterdrückung von Signalechos auf dem Datensignal auf, welche durch den PAM-Transceiver verursacht werden, wobei der Echo-Unterdrücker zwei Eingänge und einen Ausgang aufweist, wobei der Ausgang mit dem ersten Schaltungsabschnitt und dem zweiten Schaltungsabschnitt verbunden ist. Ein Eingang ist damit mit einer Ausgangsseite der Datenschnittstelle, und ein Eingang ist mit einer Eingangsseite der Datenschnittstelle verbunden, sodass auftretende Echos gemindert werden können.

In einer Ausgestaltung ist der PAM-Transceiver dazu eingerichtet, codierte Datensignale zu verarbeiten und weist einen Signalcodierer sowie einen Signaldecodierer auf.

Die Codierung des Datensignals weist dabei bevorzugt Zustände auf, deren zugehörigen Spannungssignale gleichmäßig um eine Nullspannung verteilt sind. Dem Datensignal wird mittels eines Signalcodierers eine Pseudozufälligkeit aufgeprägt, welche eine im Wesentlichen gleiche Verteilung von Zuständen zur Folge hat. Ein empfangender PAM-Transceiver decodiert diese Pseudozufälligkeit mittels eines Decodierers und übersetzt das Datensignal in einen maschinenlesbaren Binärcode. Die Pseudozufälligkeit stellt sicher, dass eine Energieübertragung zwischen PAM-Transceivern gering ausfällt, dass bei Duplex-Übertragung ein gesendetes Signal und ein empfangenes Signal nicht miteinander korrelieren und dass das adaptive Filter nicht durch Signalregelmäßigkeiten gestört werden.

Ein erfindungsgemäßes Feldgerät der Mess-/Automatisierungstechnik umfasst:
Einen Messwandler zum Erfassen einer Messgröße und Ausgeben eines mit der Messgröße korrespondierenden Messsignals;
Eine elektronische Mess-/Betriebsschaltung zum Betreiben des Messwandlers, zum Auswerten des Messsignals und Ausgeben von Messwerten der Messgröße;
Ein Gehäuse zum Behausen der elektronischen Mess-/Betriebsschaltung,
wobei die elektronische Mess-/Betriebsschaltung einen PAM-Transceiver nach einem der vorigen Ansprüche umfasst,
mittels welchem das Feldgerät eingerichtet ist, ein Datensignal zu senden und/oder zu empfangen.

Der PAM-Transceiver kann dabei beispielsweise als Modul an einen Rest der elektronischen Mess-/Betriebsschaltung angefügt oder beispielsweise auch als elektronischer Baustein auf einer Platine der elektronischen Mess-/Betriebsschaltung angeordnet sein.

Ein erfindungsgemäßes Verfahren zur Synchronisation eines erfindungsgemäßen PAM-Transceivers mit einem eingehenden Datensignal umfasst folgende Verfahrensschritte:
Vergleichen von durch den Interpretierer interpretierte, zu jeweiligen Takten gehörende Zustände mit nichtinterpretierten, zu entsprechenden Takten gehörenden Zuständen und bei mangelnder Passung adaptives Variieren von Entzerrparameter, um dadurch eine Passung herzustellen in einem ersten Verfahrensschritt,
Festlegen der drei Koeffizienten des Filters mittels angepasster Entzerrparameter des Entzerrers in einem zweiten Verfahrensschritt,
Synchronisieren der PAM-Transceiver mit dem eingehenden Datensignal mittels des MMA-Prozessors in einem dritten Verfahrensschritt.

In einer Ausgestaltung umfasst die Synchronisation ein Ermitteln einer Phase oder Taktfrequenz des Datensignals.

Im Folgenden wird die Erfindung anhand von Ausführungsbeispielen beschrieben.
Fig. 1 skizziert ein Ausführungsbeispiel eines erfindungsgemäßen PAM-Transceivers.
Fig. 2 skizziert ein beispielhaftes PAM - 5 - Signal.
Fig. 3 skizziert ein Ausführungsbeispiel eines erfindungsgemäßen Verfahrens.
Fig. 4 skizziert zwei beispielhafte erfindungsgemäße Feldgeräte, welche durch einen Kommunikationskanal verbunden sind.

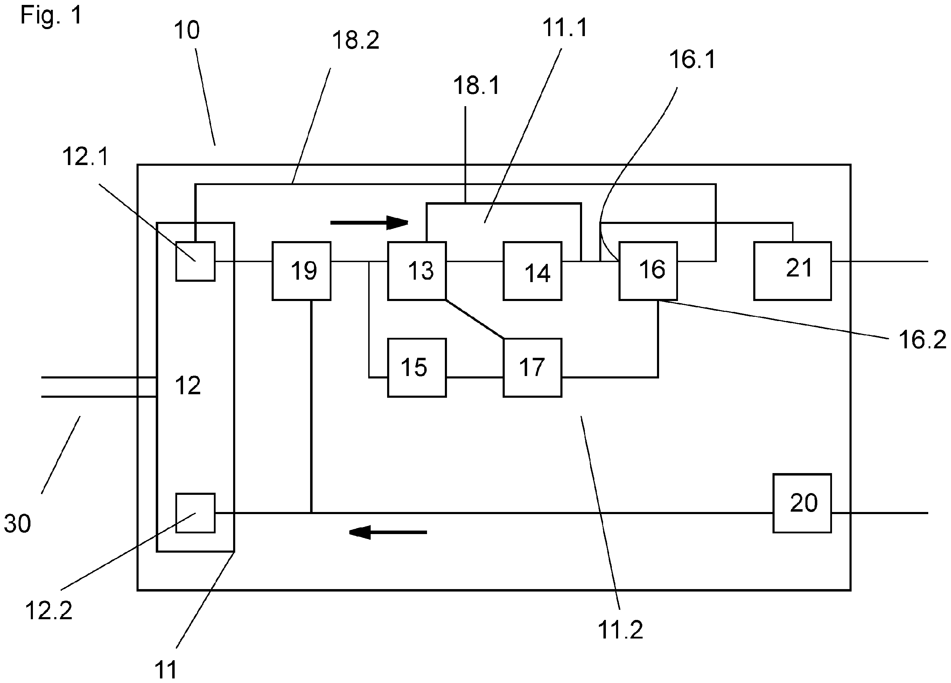

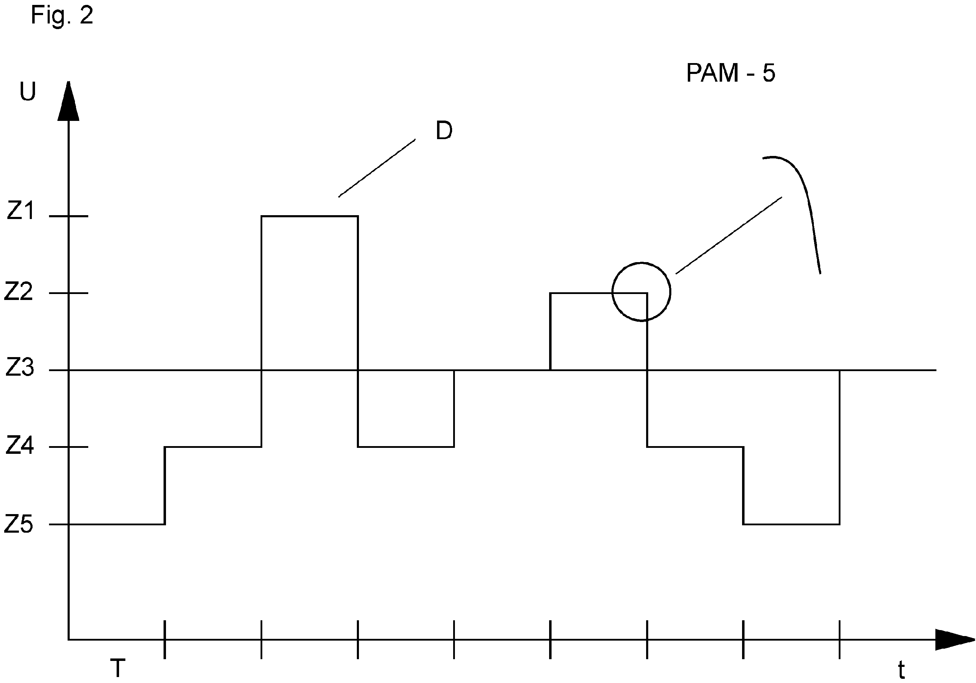

Fig. 1 zeigt eine schematische Schaltungsskizze einer elektrischen Schaltung 11 eines beispielhaften, erfindungsgemäßen PAM-Transceivers 10 (PAM = Puls-Amplituden-Modulation), welcher dazu eingerichtet ist, eine Kommunikation mittels eines Kommunikationskanals 30 zu ermöglichen. Über den Kommunikationskanal übertragene Datensignale weisen dabei eine Puls-Amplituden-Modulation auf, bei welcher zumindest zwei Zustände, und insbesondere mindestens drei Zustände um einen Spannungsnullpunkt verteilt sind, siehe dazu Fig. 2. Die Zustände sind dabei jeweils durch einen Spannungspegel gegeben. Bevorzugt weist das Datensignal eine pseudozufällige Codierung auf, sodass eine über den Kommunikationskanal übertragene Leistung auf einen unproblematischen Grenzwert beschränkt ist. Die elektrische Schaltung 11 weist eine Datenschnittstelle 12 zum Kommunikationskanal auf 30, wobei ein Analog-/Digitalwandler 12.1 ein empfangenes analoges Datensignal digitalisiert. Ein Digital-/Analogwandler 12.2 wandelt eine zu sendende, digital vorliegende Information in ein analoges PAM-Signal um. Die elektrische Schaltung 11 weist einen Signalempfangsabschnitt und kann im Falle einer Duplexkommunikationsausführung wie hier gezeigt, einen Signalsendeabschnitt aufweisen. Die genannten Abschnitte sind mittels der Richtungspfeile angezeigt. Der Signalempfangsabschnitt weist einen ersten Schaltungsabschnitt 11.1, einen zweiten Schaltungsabschnitt 11.2 auf sowie einen MMA-Prozessor 16 (kurz für Mueller-Müller-Algorithmus) auf, wobei der erste Schaltungsabschnitt mit einem ersten Eingang 16.1 des MMA-Prozessors verbunden ist, und wobei der zweite Schaltungsabschnitt mit einem zweiten Eingang 16.2 des MMA-Prozessors verbunden ist.

Das mittels der Datenschnittstelle aufgenommene Datensignal D wird nach der Digitalisierung durch den Analog/Digitalwandler 12.1 im ersten Schaltungsabschnitt dabei durch einen Entzerrer 13 von Verzerrungen, welche durch den Kommunikationskanal verursacht werden, zumindest teilweise befreit bzw. zumindest teilweise entzerrt. Ein anschließender Interpretierer 14 interpretiert das digitalisierte Datensignal und weist zu Takten des Datensignals gehörigen Zuständen jeweils ein Symbol zu. Die Zuweisung der Symbole richtet sich nach Spannungen der eingehenden Zustände bzw. nach digitalen Spannungswerten, welche Spannungen des analogen Datensignals repräsentieren. Der Entzerrer kann dabei bevorzugt ein adaptives Filter umfassen, welches Filter Filterkoeffizienten bzw. Entzerrparameter so einstellt, dass durch den Interpretierer ausgegebene Symbole zu an den Interpretierer übermittelte Zustände passen. Während einer Anlernphase werden Filterkoeffizienten nach und nach so angepasst, dass die Spannungswerte immer besser zu den zugeordneten Symbolen passen. Dazu kann eine erste Rückkopplungsschleife 18.1 wie in Fig. 1 beispielhaft gezeigt eingerichtet werden. Entzerrer mit adaptivem Filter sind bereits Stand der Technik, ein Fachmann kann sich für seine Zwecke nach einer sinnvollen Umsetzung umschauen. Die Einstellung der Filterkoeffizienten bedingt dabei ein Kompensieren einer Impulsantwort des Datenkanals.

Das mittels der Datenschnittstelle aufgenommene Datensignal D wird im parallel zum ersten Schaltungsabschnitt verlaufenden zweiten Schaltungsabschnitt durch eine Verzögerungseinheit 15 verzögert und durch einen Filter 17 mit endlicher Impulsantwort von Verzerrungen, welche durch den Kommunikationskanal verursacht werden, zumindest für den vom MMA-Prozessor ausgewerteten Bereich der Impulsantwort zumindest teilweise befreit.

Das anpassbare Filter 17 weist eine Eigenschaft auf, eine Impulsantwort des Kommunikationskanals zu symmetrisieren.

Das Filter kann beispielsweise ein "Finite-Impulse-Response"-Filter sein, wobei das dem MMA-Prozessor zugeführte Datensignal mit sich selbst gemischt wird. Das Filter 17 weist dabei drei Filterkoeffizienten auf, die drei Filterkoeffizienten betreffen beispielsweise eine Anzahl von Mischungen, Mischungsstärke, und zeitliche Verschiebung der Mischungen.

Erfindungsgemäß werden diese Filterkoeffizienten auf Basis der Filterkoeffizienten des Entzerrers 13 oder durch Messen bzw. Kenntnis der Impulsantwort des Kommunikationskanals 30 eingestellt. Wie hier dargestellt kann der Entzerrer 13 eine elektrische Datenverbindung zum Filter 17 zwecks Übermittlung der Filterkoeffizienten an das Filter 17 aufweisen. Das Filter 17 kann alternativ auch einen Eingang zwecks Eingabe von Daten bzgl. der Impulsantwort bzw. Eingabe der Filterkoeffizienten aufweisen.

Nach Einstellung der Filterkoeffizienten des Filters 17 mit endlicher Impulsantwort weist eine Impulsantwort von einer Gesamtheit aus Kommunikationskanal und zweitem Schaltungsabschnitt auf einen Spannungspuls entsprechend einer Deltadistribution oder einem Rechtecksignal im Bereich einer maximalen Amplitude der Impulsantwort einen monotonen oder insbesondere symmetrischen Verlauf auf, was für eine korrekte Funktionsweise des MMA-Prozessors bzw. eines zugrundeliegenden MuellerMüller-Algorithmus gemäß IEEE Transactions on Communications, Vol. COM-24, No.5, May 1976 notwendig ist.

Der MMA-Prozessor ist dazu eingerichtet, den MuellerMüller-Algorithmus auszuführen. Hierbei werden dem MMA-Prozessor durch den Interpretierer erkannte Symbole S und dem Datensignal zugehörige Zustände Z zugeführt, wobei der MMA-Prozessor Werte gemäß folgender Berechnungsvorschrift ausgibt: MM = (Zₙ - Sₙ₋₁)-(Sₙ - Zₙ₋₁), wobei n bzw. n-1 einen n-ten bzw. n-1-ten Takt des Datensignals auszeichnet. Bei gut eingestelltem PAM-Transceiver, bzw. gut eingestellter Abtastphase des PAM-Transceivers ist MM gleich 0, Werte ungleich 0 können zu einer Anpassung der Signalphase bzw. Abtastphase und/oder Taktung des PAM-Transceivers herangezogen werden. Der MMA-Prozessor ist jedoch darauf angewiesen, dass eine Gesamtimpulsantwort beim Zustandseingang in einem Bereich eines Maximums der Gesamtimpulsantwort im Wesentlichen monoton ist.

Der PAM-Transceiver weist zusätzlich einen Signaldecodierer 21 und im Falle einer DuplexKommunikationsausführung einen Signalcodierer 20 auf. Der Signaldecodierer ist dazu eingerichtet, die pseudozufällige Codierung in ein computerlesbares, binäres Datensignal umzuwandeln. Entsprechend ist der Signalcodierer dazu eingerichtet, aus einem computerlesbaren binären Datensignal ein PAM-Datensignal zur Übertragung mittels des Kommunikationskanals 30 zu erstellen.

Der PAM-Transceiver kann wie hier dargestellt im Falle einer DuplexKommunikationsausführung einen Echo-Unterdrücker 19 aufweisen, welcher dazu eingerichtet ist, intern entstehende Signalechos zu unterdrücken, da diese durch die Datenschnittstelle nicht vollständig vermieden werden können.

Fig. 2 skizziert ein beispielhaftes amplitudenmoduliertes Datensignal, ein PAM-5-Signal mit 5 Zuständen Z1 bis Z5. Jeder Zustand weist eine Zeitdauer auf, welche einem Takt T des Datensignals D entspricht. Durch Einrichten von mehr als zwei Zuständen ist die Informationsdichte des Datensignals erhöht. Jedoch erleidet das Datensignal aufgrund von Störeinflüssen einen Zustandszerfall, welcher sich in einem Anfangsstadium wie angedeutet durch ein Abrunden von Signalkanten ausdrückt. In fortgeschrittenem Stadium führt der Zustandszerfall zu einem Ineinanderlaufen und Mischen von benachbarten Zuständen. Bei Kenntnis der Kanalimpulsantwort des Kanals kann der Zerfall zumindest teilweise kompensiert, bzw. das Datensignal weitgehend aufgearbeitet werden. PAM-Signale sind jedoch nicht auf 5 Zustände beschränkt, sondern können generell zwei oder mehr Zustände bzw. Signalpegel aufweisen.

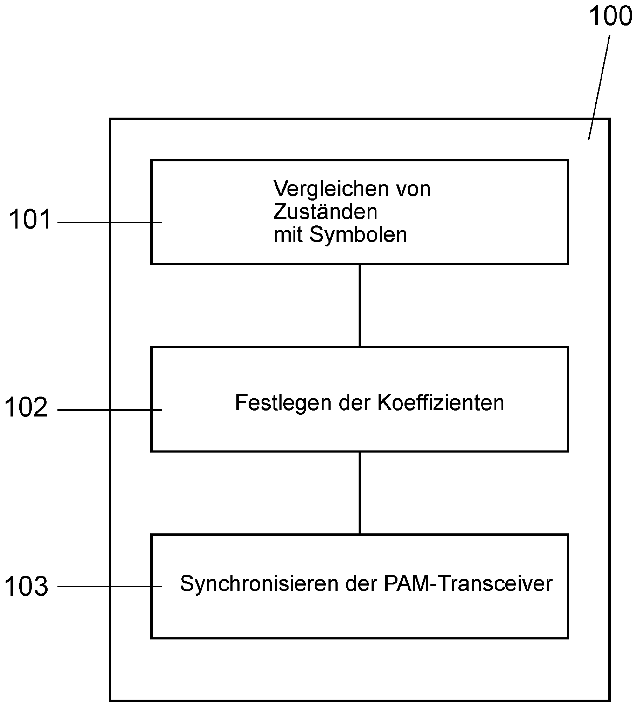

Fig. 3 skizziert ein beispielhaftes erfindungsgemäßes Verfahren 100 zur Synchronisation eines empfangenden PAM-Transceivers mit einem sendenden PAM-Transceiver, wobei in einem ersten Verfahrensschritt 101 durch den Interpretierer ausgegebene Symbole mit eingegebenen, zu gleichen Takten gehörende Zuständen verglichen werden. Dabei kann ein Unterschied zwischen einem erwarteten, einem jeweiligen Symbol entsprechenden Spannungswert und einem tatsächlich anliegenden Spannungswert dazu genutzt werden, in einem zweiten Verfahrensschritt 102 Filterkoeffizienten anzupassen um den Unterschied zwischen erwartetem Spannungswert und tatsächlich anliegendem Spannungswert zu minimieren und dadurch die Zuordnung "Zustand - Symbol" zu verbessern. Eine Abfolge der Verfahrensschritte 101 und 102 wird dabei mit nachfolgenden Takten des Datensignals wiederholt, bis eine ausreichende Konvergenz der Filterkoeffizienten stattgefunden hat. Ein Fachmann wird gemäß seiner Bedürfnisse Grenzwerte für eine solche Konvergenz auswählen.

Mit Erreichen oder Unterschreiten des Höchstwerts kann in einem dritten Verfahrensschritt 103 eine Synchronisation zwischen miteinander kommunizierenden PAM-Transceivern durchgeführt werden.

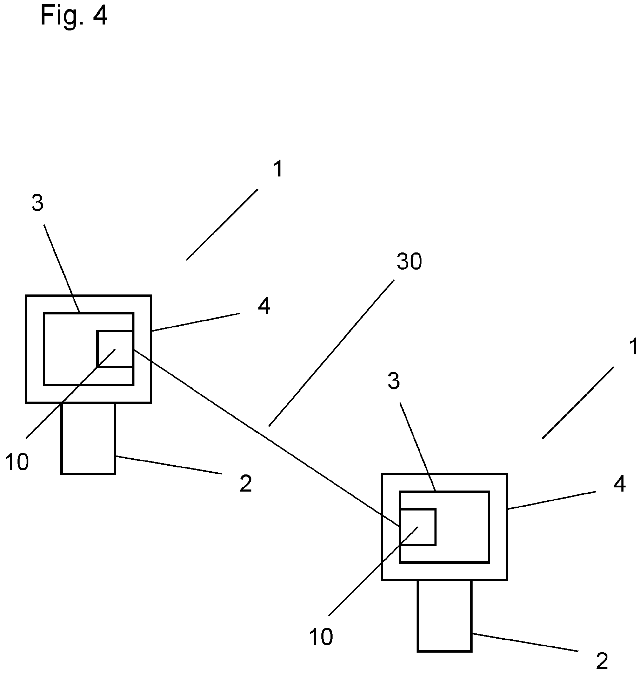

Fig. 4 skizziert zwei beispielhafte Feldgeräte 1 der Mess-/Automatisierungstechnik, welche mittels eines Kommunikationskanals 30 in Verbindung stehen. Die Feldgeräte 1 weisen jeweils einen Messwandler 2 zum Erfassen einer Messgröße auf, wobei die Messwandler dazu eingerichtet sind, jeweils ein mit der Messgröße korrespondierendes Messsignal auszugeben und an eine elektronische Mess-/Betriebsschaltung 3 des jeweiligen Feldgeräts zu übermitteln. Die elektronische Mess-/Betriebsschaltung ist dazu eingerichtet, den jeweiligen Messwandler zu betreiben und Messwerte der Messgrößen bereitzustellen und gegebenenfalls auszugeben. Die Feldgeräte weisen dabei jeweils einen erfindungsgemäßen PAM-Transceiver 10 auf. Anders als hier gezeigt, kann die Kommunikationsverbindung 30 auch indirekt über beispielsweise ein Edge-Device oder bei größeren Entfernungen über einen Signalaufbereiter verlaufen.

### Bezugszeichenliste

- 1: Feldgerät der Mess-/Automatisierungstechnik
- 2: Messwandler
- 3: elektronische Mess-/Betriebsschaltung
- 4: Gehäuse
- 10: PAM-Transceiver
- 11: elektronische Schaltung
- 11.1: erster Schaltungsabschnitt
- 11.2: zweiter Schaltungsabschnitt
- 12: Datenschnittstelle
- 12.1: Analog-/Digitalwandler
- 12.2: Digital-/Analogwandler
- 13: Entzerrer
- 14: Interpretierer
- 15: Verzögerungseinheit
- 16: MMA-Prozessor
- 16.1: erster Eingang
- 16.2: zweiter Eingang
- 17: Filter mit endlicher Impulsantwort
- 18.1: erste Rückkopplungsschleife
- 18.2: zweite Rückkopplungsschleife
- 19: Echo-Unterdrücker
- 20: Signalcodierer
- 21: Signaldecodierer
- 30: Kommunikationskanal
- 100: Verfahren
- 101: Erster Verfahrensschritt
- 102: Zweiter Verfahrensschritt
- 103: Dritter Verfahrensschritt
- D: Datensignal
- S: Symbol
- T: Takt
- Z: Zustand

## Patentansprüche

1. PAM-Transceiver (10) mit einer elektronischen Schaltung (11) eingerichtet zur Verarbeitung eines empfangenen elektrischen Datensignals (D) mit mindestens zwei Zuständen, und insbesondere mindestens drei Zuständen, wobei das Datensignal eine Abfolge von Zuständen umfasst, welche Zustände jeweils ein Informationssymbol repräsentieren, wobei jedem Symbol ein Takt (T) des Datensignals zugeordnet ist,
umfassend:
Eine Datenschnittstelle (12) eingerichtet zur Verbindung mit einem Kommunikationskanal (30), insbesondere einem Duplex-Kommunikationskanal, und eingerichtet zur Digitalisierung des Datensignals, wobei die Datenschnittstelle einen Analog-/Digitalwandler (12.1) aufweist, welcher dazu eingerichtet ist, das von der Datenschnittstelle empfangene Datensignal zu digitalisieren und dem ersten Schaltungsabschnitt (11.1) sowie dem zweiten Schaltungsabschnitt (11.2) zuzuführen,
Einen ersten Schaltungsabschnitt (11.1) verbunden mit der Datenschnittstelle umfassend:
- Einen Entzerrer (13) zur Kompensation von Verzerrungen des Datensignals, welche durch den Kommunikationskanal verursacht werden;
- Einen hinter dem Entzerrer angeordneten Interpretierer (14) zur Erkennung von Symbolen (S), welche durch das Datensignal übertragen werden;
Einen zweiten Schaltungsabschnitt (11.2) verbunden mit der Datenschnittstelle umfassend:
- Eine Verzögerungseinheit (15) zur zeitlichen Verschiebung des Datensignals;
Einen nach dem Mueller-Müller Algorithmus arbeitenden MMA-Prozessor (16) zur Erkennung einer Signalphase des Datensignals mit einem ersten Eingang (16.1) und einem zweiten Eingang (16.2),
wobei der erste Schaltungsabschnitt mit dem ersten Eingang verbunden ist, um dem MMA-Prozessor erkannte Symbole zuzuführen,
und wobei der zweite Schaltungsabschnitt mit dem zweiten Eingang verbunden ist,
**dadurch gekennzeichnet, dass**
der zweite Schaltungsabschnitt ein anpassbares Filter (17) mit endlicher Impulsantwort aufweist,
wobei das Filter dazu eingerichtet ist, eine Impulsantwort des Kommunikationskanals zu symmetrisieren.

2. PAM-Transceiver nach Anspruch 1,
wobei das Filter (17) mittels dreier Koeffizienten einstellbar ist,
wobei die Koeffizienten beispielsweise auf Basis eines zu einem Takt gehörenden Symbols, auf einem zu einem unmittelbar vorausgehenden Takt gehörenden früheren Zustand (Z) und einem zu einem unmittelbar nachfolgenden Takt gehörenden späteren Zustand (Z) einstellbar sind,
wobei das Filter insbesondere die Eigenschaft hat, eine Abfolge "früherer Zustand - Symbol - späterer Zustand" bezüglich einer Impulsantwort in einem Zustand von passender bzw. idealer Phase zu symmetrisieren.

3. PAM-Transceiver nach Anspruch 1 oder 2,
wobei der Entzerrer (13) dazu eingerichtet ist, durch den Interpretierer (14) interpretierte, zu jeweiligen Takten gehörende Zustände mit nichtinterpretierten, zu entsprechenden Takten gehörenden Zuständen zu vergleichen und bei mangelnder Passung Entzerrparameter adaptiv zu variieren und dadurch eine Passung herzustellen.

4. PAM-Transceiver nach Anspruch 3,
wobei der erste Schaltungsabschnitt (11.1) eine erste Rückkopplungsschleife (18.1) von einem Ausgang des Interpretierers zum Entzerrer aufweist.

5. PAM-Transceiver nach Anspruch 2,
wobei die drei Koeffizienten des Filters (17) durch Messen oder Kenntnis der Impulsantwort des Kommunikationskanals festlegbar sind,
oder
wobei die drei Koeffizienten des Filters (17) mittels angepasster Entzerrparameter des Entzerrers festlegbar sind.

6. PAM-Transceiver nach einem der vorigen Ansprüche,
wobei der PAM-Transceiver dazu eingerichtet ist, mittels des MMA-Prozessors (16) eine Taktfrequenz des Datensignals (D) zu bestimmen und eine Kommunikation über den Kommunikationskanal zu synchronisieren.

7. PAM-Transceiver nach Anspruch 6,
wobei der MMA-Prozessor (16) dazu eingerichtet ist, der Datenschnittstelle (12) und insbesondere dem Analog-/Digitalwandler (12.1) eine Information zu einer Phase zwischen einem Abtastpunkt des MMA-Prozessors und dem Datensignal bereitzustellen,
wobei eine zweite Rückkopplungsschleife (18.2) eingerichtet ist, um die Information an die Datenschnittstelle bzw. an den Analog-/Digitalwandler zu übermitteln.

8. PAM-Transceiver nach einem der vorigen Ansprüche,
wobei der PAM-Transceiver dazu eingerichtet ist, codierte Datensignale zu verarbeiten und einen Signalcodierer (20) sowie einen Signaldecodierer (21) aufweist.

9. PAM-Transceiver nach einem der vorigen Ansprüche,
wobei der PAM-Transceiver einen Echo-Unterdrücker (19) zur Unterdrückung von Signalechos auf dem Datensignal aufweist, welche Signalechos durch den PAM-Transceiver verursacht werden.

10. Feldgerät (1) der Mess-/Automatisierungstechnik umfassend:
Einen Messwandler (2) zum Erfassen einer Messgröße und Ausgeben eines mit der Messgröße korrespondierenden Messsignals;
Eine elektronische Mess-/Betriebsschaltung (3) zum Betreiben des Messwandlers, zum Auswerten des Messsignals und Ausgeben von Messwerten der Messgröße;
Ein Gehäuse (4) zum Behausen der elektronischen Mess-/Betriebsschaltung,
**dadurch gekennzeichnet, dass**
die elektronische Mess-/Betriebsschaltung (3) einen PAM-Transceiver nach einem der vorigen Ansprüche umfasst,
mittels welchem das Feldgerät eingerichtet ist, ein Datensignal zu senden und/oder zu empfangen.

11. Verfahren (100) zur Synchronisation eines PAM-Transceivers nach einem der Ansprüche 1 bis 9 mit einem eingehenden Datensignal,
Vergleichen von durch den Interpretierer interpretierte, zu jeweiligen Takten gehörende Zustände mit nichtinterpretierten, zu entsprechenden Takten gehörenden Zuständen und bei mangelnder Passung adaptives Variieren von Entzerrparameter, um dadurch eine Passung herzustellen in einem ersten Verfahrensschritt (101),
Festlegen der Koeffizienten des Filters mittels angepasster Entzerrparameter des Entzerrers in einem zweiten Verfahrensschritt (102),
Synchronisieren der PAM-Transceiver mit dem eingehenden Datensignal mittels des MMA-Prozessors in einem dritten Verfahrensschritt (103).

12. Verfahren nach Anspruch 11,
wobei die Synchronisation ein Ermitteln einer Phase des Datensignals umfasst.

## Claims

1. PAM transceiver (10) with an electronic circuit (11) set up for processing a received electrical data signal (D) with at least two states, and in particular at least three states, wherein the data signal comprises a sequence of states, which states each represent an information symbol, each symbol being assigned a clock (T) of the data signal,
comprising:
A data interface (12) set up for connection to a communication channel (30), in particular a duplex communication channel, and set up for digitizing the data signal, the data interface having an analog/digital converter (12.1) which is set up to digitize the data signal received from the data interface and to feed it to the first circuit section (11.1) and to the second circuit section (11.2),
A first circuit section (11.1) connected to the data interface:
- An equalizer (13) to compensate for distortions of the data signal caused by the communication channel;
- An interpreter (14) arranged behind the equalizer for recognizing symbols (S) which are transmitted by the data signal;
A second circuit section (11.2) connected to the data interface:
- A delay unit (15) for time-shifting the data signal;
An MMA processor (16) operating according to the Mueller-Müller algorithm for recognizing a signal phase of the data signal with a first input (16.1) and a second input (16.2),
where the first circuit section is connected to the first input to feed recognized symbols to the MMA processor,
and where the second circuit section is connected to the second input,
**characterized in that**
the second circuit section has an adjustable filter (17) with a finite impulse response,
whereby the filter is set up to symmetrize an impulse response of the communication channel.

2. PAM transceiver according to claim 1,
the filter (17) being adjustable by means of three coefficients,
whereby the coefficients can be set, for example, on the basis of a symbol belonging to a clock, on an earlier state (Z) belonging to an immediately preceding clock and on a later state (Z) belonging to an immediately following clock,
whereby the filter has in particular the property of symmetrizing a sequence "earlier state - symbol - later state" with respect to an impulse response in a state of matching or ideal phase.

3. PAM transceiver according to claim 1 or 2,
wherein the equalizer (13) is set up to compare states interpreted by the interpreter (14) and belonging to respective clocks with uninterpreted states belonging to corresponding clocks and, in the event of a lack of fit, to adaptively vary equalization parameters and thereby produce a fit.

4. PAM transceiver according to claim 3,
wherein the first circuit section (11.1) comprises a first feedback loop (18.1) from an output of the interpreter to the equalizer.

5. PAM transceiver according to claim 2,
wherein the three coefficients of the filter (17) can be determined by measuring or knowing the impulse response of the communication channel,
or
wherein the three coefficients of the filter (17) can be determined by means of adapted equalization parameters of the equalizer.

6. PAM transceiver according to any of the preceding claims,
wherein the PAM transceiver is set up to determine a clock frequency of the data signal (D) by means of the MMA processor (16) and to synchronize communication via the communication channel.

7. PAM transceiver according to claim 6,
wherein the MMA processor (16) is set up to provide the data interface (12) and in particular the analog/digital converter (12.1) with information on a phase between a sampling point of the MMA processor and the data signal,
wherein a second feedback loop (18.2) is set up to transmit the information to the data interface or to the analog/digital converter.

8. PAM transceiver according to any of the preceding claims,
wherein the PAM transceiver is set up to process coded data signals and has a signal encoder (20) and a signal decoder (21).

9. PAM transceiver according to any of the preceding claims,
wherein the PAM transceiver comprises an echo suppressor (19) for suppressing signal echoes on the data signal, which signal echoes are caused by the PAM transceiver.

10. Field device (1) of the measurement/automation technology:
A measuring transducer (2) for detecting a measured variable and outputting a measurement signal corresponding to the measured variable;
An electronic measuring/operating circuit (3) for operating the measuring transducer, evaluating the measuring signal and outputting measured values of the measured variable;
A housing (4) for housing the electronic measuring/operating circuit,
**characterized in that**
the electronic measuring/operating circuit (3) comprises a PAM transceiver according to one of the preceding claims,
by means of which the field device is set up to send and/or receive a data signal.

11. Method (100) for synchronizing a PAM transceiver according to any one of claims 1 to 9 with an incoming data signal,
Comparison of states interpreted by the interpreter and belonging to respective clocks with non-interpreted states belonging to corresponding clocks and, in the event of a lack of fit, adaptive variation of equalization parameters in order to thereby produce a fit in a first method step (101),
Determining the coefficients of the filter by means of adapted equalization parameters of the equalizer in a second process step (102),
Synchronizing the PAM transceiver with the incoming data signal using the MMA processor in a third process step (103).

12. Method according to claim 11,
wherein the synchronization comprises a determination of a phase of the data signal.

## Revendications

1. Emetteur-récepteur PAM (10) avec un circuit électronique (11) aménagé pour le traitement d'un signal de données électrique reçu (D) avec au moins deux états, et en particulier au moins trois états, le signal de données comprenant une séquence d'états, lesquels états représentent chacun un symbole d'information, une horloge (T) du signal de données étant associée à chaque symbole,
comprenant:
Une interface de données (12) aménagée pour la liaison avec un canal de communication (30), notamment un canal de communication duplex, et aménagée pour la numérisation du signal de données, l'interface de données présentant un convertisseur analogique/numérique (12.1) qui est aménagé pour numériser le signal de données reçu par l'interface de données et pour l'amener à la première section de circuit (11.1) ainsi qu'à la deuxième section de circuit (11.2),
Une première section de circuit (11.1) connectée à l'interface de données comprenant :
- un égaliseur (13) pour compenser les distorsions du signal de données causées par le canal de communication ;
- un interpréteur (14) placé derrière l'égaliseur pour reconnaître les symboles (S) transmis par le signal de données ;
Une deuxième section de circuit (11.2) connectée à l'interface de données comprenant :
- une unité de retard (15) pour décaler le signal de données dans le temps ;
un processeur MMA (16) fonctionnant selon l'algorithme de Mueller-Müller pour la reconnaissance d'une phase de signal du signal de données avec une première entrée (16.1) et une deuxième entrée (16.2),
la première section de circuit étant connectée à la première entrée pour fournir des symboles reconnus au processeur MMA,
et dans lequel la deuxième section de circuit est connectée à la deuxième entrée,
**caractérisé en ce que**
la deuxième section de circuit comprend un filtre adaptable (17) à réponse impulsionnelle finie,
dans lequel le filtre est adapté pour symétriser une réponse impulsionnelle du canal de communication.

2. Émetteur-récepteur PAM selon la revendication 1,
le filtre (17) étant réglable au moyen de trois coefficients,
les coefficients étant réglables par exemple sur la base d'un symbole appartenant à une mesure, sur un état antérieur (Z) appartenant à une mesure immédiatement précédente et sur un état ultérieur (Z) appartenant à une mesure immédiatement suivante,
le filtre ayant notamment la propriété de symétriser une séquence "état antérieur - symbole - état ultérieur" par rapport à une réponse impulsionnelle dans un état de phase appropriée ou idéale.

3. Émetteur-récepteur PAM selon la revendication 1 ou 2,
l'égaliseur (13) étant conçu pour comparer des états interprétés par l'interprète (14) et appartenant à des horloges respectives avec des états non interprétés appartenant à des horloges correspondantes et, en cas d'inadéquation, pour faire varier de manière adaptative des paramètres d'égalisation et établir ainsi une adéquation.

4. Émetteur-récepteur PAM selon la revendication 3,
dans lequel la première section de circuit (11.1) comprend une première boucle de rétroaction (18.1) allant d'une sortie de l'interpréteur à l'égaliseur.

5. Émetteur-récepteur PAM selon la revendication 2,
dans lequel les trois coefficients du filtre (17) peuvent être déterminés par mesure ou connaissance de la réponse impulsionnelle du canal de communication,
ou
les trois coefficients du filtre (17) pouvant être fixés au moyen de paramètres d'égalisation adaptés de l'égalisateur.

6. Émetteur-récepteur PAM selon l'une quelconque des revendications précédentes,
dans lequel l'émetteur-récepteur PAM est conçu pour déterminer une fréquence d'horloge du signal de données (D) au moyen du processeur MMA (16) et pour synchroniser une communication sur le canal de communication.

7. Émetteur-récepteur PAM selon la revendication 6,
dans lequel le processeur MMA (16) est adapté pour fournir à l'interface de données (12) et en particulier au convertisseur analogique/numérique (12.1) une information concernant une phase entre un point d'échantillonnage du processeur MMA et le signal de données,
dans lequel une deuxième boucle de rétroaction (18.2) est agencée pour transmettre l'information à l'interface de données ou au convertisseur analogique/numérique.

8. Émetteur-récepteur PAM selon l'une quelconque des revendications précédentes,
dans lequel l'émetteur-récepteur PAM est adapté pour traiter des signaux de données codés et comprend un codeur de signal (20) et un décodeur de signal (21).

9. Émetteur-récepteur PAM selon l'une quelconque des revendications précédentes,
dans lequel l'émetteur-récepteur PAM comprend un suppresseur d'écho (19) pour supprimer les échos de signal sur le signal de données, lesquels échos de signal sont provoqués par l'émetteur-récepteur PAM.

10. Appareil de terrain (1) de la technique de mesure/automatisation comprenant
un convertisseur de mesure (2) pour détecter une grandeur de mesure et émettre un signal de mesure correspondant à la grandeur de mesure ;
Un circuit électronique de mesure/d'exploitation (3) pour faire fonctionner le convertisseur de mesure, pour évaluer le signal de mesure et pour émettre des valeurs de mesure de la grandeur mesurée ; un boîtier (4) pour loger le circuit électronique de mesure/de fonctionnement,
**caractérisé en ce que**
le circuit électronique de mesure/fonctionnement (3) comprend un émetteur-récepteur PAM selon l'une des revendications précédentes,
au moyen duquel l'appareil de terrain est conçu pour envoyer et/ou recevoir un signal de données.

11. Procédé (100) de synchronisation d'un émetteur-récepteur PAM selon l'une quelconque des revendications 1 à 9 avec un signal de données entrant,
la comparaison d'états interprétés par l'interprète, appartenant à des horloges respectives, avec des états non interprétés, appartenant à des horloges correspondantes et, en cas d'inadéquation, la variation adaptative de paramètres d'égalisation pour établir ainsi une adéquation dans une première étape de procédé (101),
fixer les coefficients du filtre au moyen de paramètres d'égalisation adaptés de l'égalisateur dans une deuxième étape de procédé (102),
synchroniser les émetteurs-récepteurs PAM avec le signal de données entrant au moyen du processeur MMA dans une troisième étape du procédé (103).

12. Procédé selon la revendication 11,
dans lequel la synchronisation comprend une détermination d'une phase du signal de données.
